# EUROPEAN PATENT APPLICATION

(11) **EP 0 733 742 A1**
(43) Date of publication of application: **25.09.1996**
(21) Application number: 96302027.6
(22) Date of filing: 25.03.1996
(51) Int. Cl.: E02F 9/16, B60N 2/06

(54) **Movable seat for excavator**

(30) Priority: 24.03.1995 GB 9506077
(71) Applicant: HANIX EUROPE LIMITED, Denton, Manchester M34 3SW (GB)
(72) Inventor: Mikami, Toshihiko, Marple Bridge SK6 5ER (GB)
(74) Representative: Downey, William Gerrard

(57) **Abstract**

An excavator (10) having a digging member (20) connected to a platform (21). A seat (23) is mounted on the platform (21) so as to be movably laterally on the platform (21).

## Description

The present invention relates to an excavator. The invention has particular, but not exclusive reference to vehicles commonly referred to as mini-excavators.

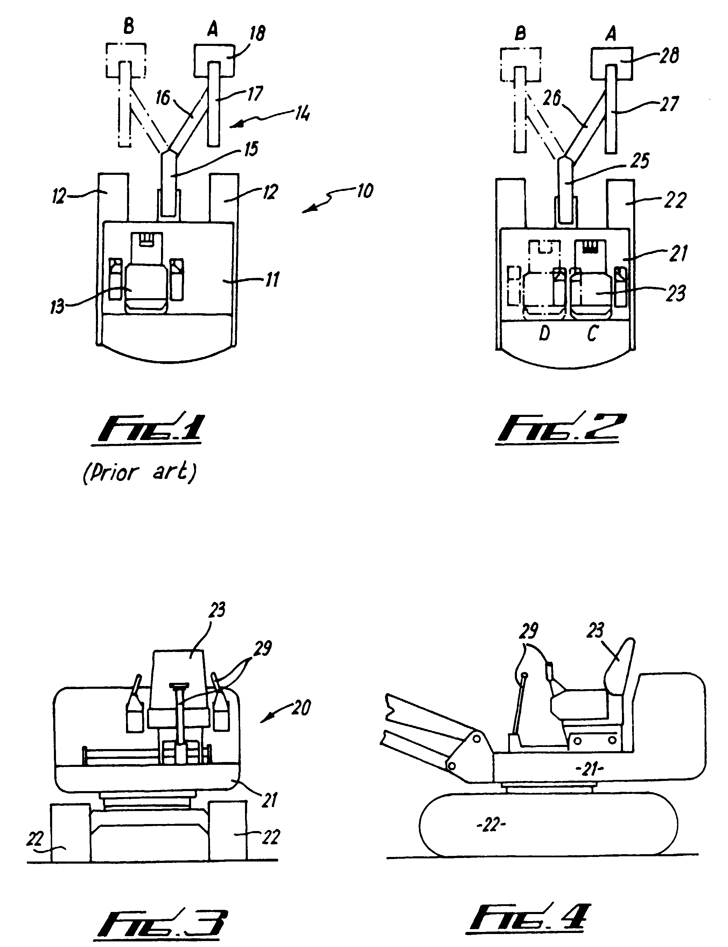

One known type of mini-excavator is illustrated in Fig.1. The mini-excavator 10 comprises a platform 11 mounted on a pair of tracks 12. The platform is rotatable through 360°. A driver's seat 13 is securely fixed on the left hand side of the platform as illustrated. A digging member 14 is connected to the front of the platform 11 via a pivot joint. The digging member comprises three booms 15,16,17 and an arm joint (not illustrated) connected in series with a shovel 18 provided at the free end of the digging member.

In use the operator of the excavator 10 can move the digging shovel 18 between the illustrated positions "A" and "B" as appropriate. When the shovel 18 is in position "A" the operator cannot see the shovel 18 from the seat 13 as the booms 15,16,17 obstruct the operator's vision. The operator may also not be able to see the shovel 18 when the shovel 18 enters a deep excavated hole. When the operator cannot see the shovel 18 the work efficiency and safety of the digging operation are impaired.

The present invention has been made from a consideration of this problem.

According to the present invention there is provided an excavator having a digging member and a platform, a seat being mounted on the platform, wherein the seat is movable laterally on the platform.

By moving the seat the operator can remove the obstruction from view and can then see the shovel in operation. The working efficiency of the excavator is thus much improved and the possibility of accidents occurring is reduced.

Preferably the seat is located on a support, the support being mounted for sliding movement along a rail secured to the platform.

In a preferred embodiment a latch mechanism is used to secure the seat in any of a number of different lateral positions on the platform.

The seat is ideally movable substantially across the full width of the platform. The seat may ideally move about 30 cms.

Preferably at least some of and more preferably all of the operator's controls also move with the seat.

The seat may also move forwardly and/or rearwardly.

The invention will now be described further, by way of example, with reference to the accompanying drawings in which:-
Fig.1 is a plan view of a prior art mini-excavator;
Fig.2 is a plan view of a mini-excavator in accordance with the invention;
Fig.3 is a front elevation of the mini-excavator of Fig.2;
Fig.4 is a side elevation of the mini-excavator of Figs. 2 and 3; and
Fig.5 shows a more detailed view of the arrangement which facilitates lateral seat movement.

The prior art of Fig.1 has been discussed in detail in the introductory passages hereof, and will not be discussed further here.

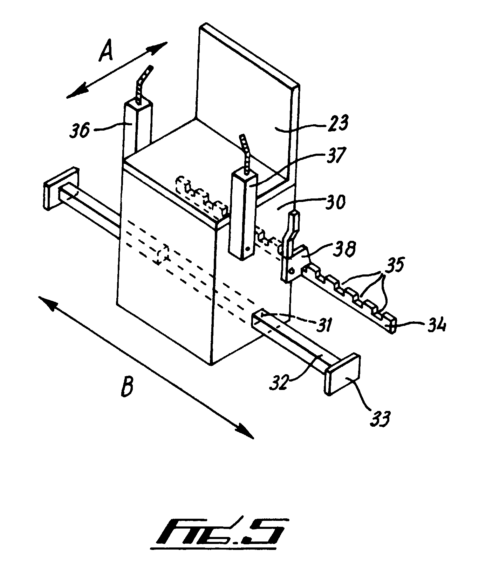

Referring to Figs. 2 to 4 a mini-excavator 20 comprises a platform 21 mounted on a pair of tracks 22. The platform is rotatable through 360°. A driver's seat 23 is located on the platform 21. The seat is laterally movable along the platform 21 between positions "C" and "D" as illustrated in Fig.2 A digging member 24 is connected to the front of the platform via a pivot joint. The digging member comprises three beams 25,26,27 and an arm (not illustrated) connected in series with a shovel 28 provided at the free end of the digging member 24.

In use the driver can move the shovel 28 between positions "A" and "B" as in the prior art design. Movement of the shovel when in position "A" cannot be viewed by the driver when the seat 23 is in position "D". Thus the driver moves the seat together with the controls 29 for the excavator into position "C" when the shovel is in position "A". By appropriate movements of the seat the driver can achieve optimum vision of the shovel 28 at all times.

Fig.5 shows a more detailed view of the arrangement which facilitates lateral movement of the seat 23. The seat 23 is secured to a support 30 in such a manner as to allow sliding movement of the seat 23 relative to the support 30 in the directions of double headed arrow A. Thus the seat may be moved rearwardly and forwardly so as to adjust the distance between the seat and the control rod 29. This allows for adjustment for leg length. Thus rearward and forward movement is achieved after disengaging a latch which in some embodiments would be controlled by a control handle 26. The operator then holds onto the control handle 26 and moves the seat forward and/or backward as desired by moving his bottom while keeping his feet firmly on the platform floor.

The support 30 has an aperture 31 extending laterally therethrough. This aperture is captured on a rail 32 so as to facilitate sliding movement of the support 30 and the seat 23 on the rail 32. The ends of the rail 32 are secured to plates 33 which in turn are secured to a platform.

A second rail 36 is also secured to the platform. This second rail has a number of grooves 35 provided therein. One of said grooves 35 is engaged by a latch (not shown) which is operated by a control lever 37. In use the control lever 37 is used to disengage the latch from the second rail 34 and the support 30 and thus seat 23 is moveable laterally by placing the operator's feet firmly on the platform floor and moving the operator's bottom. Once in the desired position the lever is used to engage the latch with a groove on the second rail.

A further locking latch 38 is also provided for engagement with a groove 35 on the second rail. This is a safety feature so as to ensure that the seat 23 does not move laterally on the platform if the control lever 37 is accidentally moved.

It is to be understood that the above described embodiment is by way of illustration only. Many modifications and variations are possible.

## Claims

1. An excavator having a digging member and a platform, a seat being mounted on the platform, wherein the seat is movable laterally on the platform.

2. An excavator as claimed in claim 1, wherein the seat is located on a support, the support being mounted for sliding movement along a rail secured to the platform.

3. An excavator as claimed in claim 1 or claim 2, wherein a latch mechanism is used to secure the seat in any of a number of different lateral positions on the platform.

4. An excavator as claimed in any preceding claim, wherein the seat is movable substantially across the full width of the platform.

5. An excavator as claimed in any preceding claim, wherein the seat may move about 30 cms.

6. An excavator as claimed in any preceding claim, wherein at least some of the operator's controls move with the seat.

7. An excavator as claimed in any preceding claim, wherein the seat may also move forwardly and/or rearwardly.
